# EUROPEAN PATENT SPECIFICATION

(11) **EP 0 854 058 B1**
(45) Date of publication and mention of the grant of the patent: **05.09.2001**
(21) Application number: 98100153.0
(22) Date of filing: 07.01.1998
(51) Int. Cl.: B60H 1/32, F25B 43/00, F25B 39/04

(54) **Vehicle air conditioning system and dryer-cartridge for a vehicle air conditioning system**
Fahrzeug-Klimaanlage und Trocknerpatrone für eine Fahrzeug-Klimaanlage
Dispositif de conditionnement d'air pour véhicule et cartouche de séchage pour un dispositif de conditionnement d'air pour véhicule

(30) Priority: 15.01.1997 DE 29700640 U
(43) Date of publication of application: 22.07.1998
(73) Proprietor: S.K.G. Italiana S.p.A., 43040 Scarzara (Parma) (IT)
(72) Inventor: Bernini, Michele, 43100 Parma (IT); Edel, Jacques, 92100 Boulogne, Billancourt (FR)
(74) Representative: Grünecker, Kinkeldey, Stockmair & Schwanhäusser Anwaltssozietät

(56) References cited:
- EP-A- 0 689 014
- DE-A- 4 035 071
- DE-A- 4 319 293
- DE-A- 4 402 927
- US-A- 4 255 940
- US-A- 5 184 480
- BUURG R: "KONDENSATORMODUL FUR KRAFTFAHRZEUG-KLIMAANLAGEN" ATZ AUTOMOBILTECHNISCHE ZEITSCHRIFT, vol. 97, no. 5, 1 May 1995, pages 304-307, XP000511523

## Description

The present invention relates to a vehicle air conditioning system according to the preamble part of claim 1 and a dryer-cartridge according to the preamble part of parallel claim 5.

In an air conditioning system known from DE-A-43 19 293, a cavity is provided in parallel to a collection channel of a condenser. Within said cavity, the coolant agent only passes partially through the dryer-cartridge. The charge, e.g., a zeolith-granulate, is received within the housing of the cartridge in a bag permeable for the cooling agent. Said bag is unable to guarantee uniform flow-through rate for the cooling agent and is unable to define a certain pore size. A permanent danger exists during system operation that small particles may circulate in the cooling agent flow, originating from, e.g., the compressor. Furthermore, for the purpose of easy manipulation and confining the granulate, it is usual practice to use a similar bag also in a dryer-container provided separate from the condenser in the cooler circuits (DE-A- 40 35 071).

According to DE-A- 44 02 927, a dome-shaped filter sieve for particles is provided within the dryer-cartridge. The dryer-cartridge is mounted in a sealed fashion in a seat of the condenser collecting channel, such that all of the cooling agent has to pass through the filter sieve. In order to also intercept very small particles, the filter sieve would require an extremely small pore size. Said small pore size, however, would, due to the limited cross sectional area surveyed by said filter sieve, lead to an undesirable high flow-through resistance and to the danger that collected particles could increase the flow-through resistance of the filter sieve almost to the point of blockage.

According to EP-A-0 689 014, which discloses the features of the preambles of claim 1 and 5, the dryer-cartridge is secured in the seat of a channel of the condenser in a sealed fashion in order to force all of the cooling agent through the dryer-cartridge. Outflow openings of the dryer-cartridge are covered by a fine filter sieve having a mesh size between 60µm and 100µm. The desiccant-charge in the dryer-cartridge is confined in a liquid-permeable supporting sieve. Only a relatively small cross sectional area is provided at the outflow side in which the flow-through resistance of the fine filter sieve is disadvantageous, particularly if withheld particles are collected thereon.

It is a task of the present invention to create a vehicle air conditioning system of the kind as disclosed as well as a dryer-cartridge for a vehicle air conditioning system being manufacturable at a reasonable cost and being able to be comfortably manipulated, such that with comfortable manipulation, improved operating safety can be achieved.

Said task is solved, according to the invention, with the features of claim 1 and the features of claim 5.

A condenser intended for a vehicle air conditioning system can be comfortably equipped with the easy-to-manipulate dryer-cartridge which can be produced with low costs and little effort. The dryer-cartridge can be prefabricated for operation, can be comfortably stored and delivered; occasionally already provided with the desiccant filling. The filter material covering the flow-through passage opening and the large openings offers, independent of the flow direction, a uniform and constant flow-through ratio for the coolant agents. A bag is not necessarily needed, nevertheless the filling is stored safely. Particularly with the filter material in the large openings, an effective filtering effect for dangerous small particles is achieved, as required by automobile manufacturers, without a significant danger of a strong throttling effect. This is because the relatively limited cross sectional area of the flow-through opening is not used for the fine filtering step, but the significantly larger cross sectional area as defined by all openings of the dryer-cartridge housing. This is achieved by consideration of the given separation between the inflow side and the outflow side present when the dryer-cartridge is inserted into the seat. Said separation hinders a deviation of the fine filter material by small particles, irrespective of the location where the fine filtering process is carried out. Since the fine filtering effect takes place in the large openings, relatively uniform and constant flow-through ratios with uniformly low flow-through resistance for the cooling agents are achieved. Even in the case of many small particles, there is always a sufficiently large enough cross sectional area usable for the fine filtering process. The operational safety of the air conditioning system is improved as water is reliably separated from the cooling agent and, additionally, dangerous small particles are hindered from circulating in the cooling circuit, even during long periods of operation of the air conditioning system.

When inserted into a seat, the dryer-cartridge according to claim 5 forces an oriented flow-through the charge by the entire cooling agent, so that the cooling agent remains free of water. The filter material in the large sized openings is assuring that unavoidable small particles in the cooling circuit are caught at the dryer-cartridge and collected there. A plurality of the large openings and their large size, respectively, offer a large total area, in order to guarantee favorable flow conditions and a low flow-through resistance for the cooling agent despite the filtering effect for small particles. Handling, when inserting and replacing the dryer-cartridge, is simple and comfortable. Even a large amount of granulate can be filled in without a bag. The dryer-cartridge is useful for a condenser as well as for a dryer- or accumulator- container of the air conditioning system provided that there is a seat to mount the dryer-cartridge and to separate the inflow side and the outflow side of the cooling agent from each other as soon as the dryer-cartridge is inserted.

According to claim 2, it is possible, as required by almost all automobile manufacturers, to intercept even extremely small particles on a large filtering surface by means of the filter material in the openings. Said particles cannot deviate the seat. *In toto,* an extremely large filtering surface is provided by the plurality and/or the large size of the openings, so that the danger of an undesirably high flow-through resistance is prevented even with maximum cooling agent flow rate or with significant particle loads in the cooling agent. The relatively larger pore size in the flow-through passage opening does not generate a significant throttling effect, but nevertheless guarantees a coarser filtering effect.

According to claim 3, mounting space is saved as the dryer-cartridge can be mounted in the collecting channel of the block-type tubular-rib condenser without the necessity of additional space (two different possible operating positions in relation to the seat). The cooling agent enters the dryer-cartridge either through the flow-through passage opening into the charge, or leaves it through the flow-through passage opening. Dangerous small particles are intercepted due to the separation in the seat outside or inside at the filter material in the openings. Said particles can fall off the filter material due to the pressure differences and the flow dynamics during operation, so that the large filtering surface will not become jammed or clogged.

According to claim 4, it is particularly preferable to have a catching chamber in which filtered-out particles are retained and collected. When replacing the dryer-cartridge, collected mud or contaminations is, at least to a considerable extent, removed with the catching collar, so that favorable operating conditions and improved operational safety is achieved with the new or replaced dryer-cartridge. Particles filtered out earlier can sink from the filter material covering the openings into the catching chamber in order to keep the useable large filtering cross sectional area clear even during long operating periods.

According to claim 6, a particular retaining effect is achieved, even in the flow-through passage opening, which might be important for larger particles originating from the desiccant-charge.

According to claim 7, the relatively large pore size of the filter material in the flow-through passage opening is responsible for a low flow-through resistance even with maximum flow rate, while the very small pore size of the filter material covering the other openings generates the very important retaining effect for small particles, particularly over a very large total surface area, such that the occasionally noticeable flow-through resistance of the filter material having the small pore size and covering the openings does not lead to a disadvantageous effect due to the particular large cross sectional area, or that the total flow resistance through the filter material having the small pore size is about the same as the flow-through resistance of the filter material having the large pore size in the flow-through passage opening.

According to claim 8, the filter material covering the flow-through passage opening can be a flat disk or can have other configurations. Even a filter pad can be used there.

According to claim 9, the cartridge housing simultaneously acts as holder and positioning element for the catching collar. The catching collar first catches and collects particles sinking downwardly from the filter material. Separated particles and other contaminations can then be removed when replacing the dryer-cartridge.

According to claim 10, the dryer-cartridge can be produced with reasonable costs and precise dimensions, even in large series. The bonding or integration of the filter material into the cartridge housing or shell assures that the filter material maintains its position in the openings, does not significantly contract, or does not locally compress the charge due to the flow pressure difference or the flow dynamics. This results in constantly maintained uniform flow-through conditions and improved operation safety.

According to claim 11, the cartridge housing is injection molded in one step together with the filter material, occasionally even together with the catching collar. The plain filter material can be a prefabricated tube section or a tube-like rolled blank, the longitudinal edges there will be integrated in one longitudinal rib of the housing. This may contribute to low cost manufacturing of the cartridge.

According to claim 12, the cartridge housing can be easily filled with the charge and closed afterwards by means of the insert, e.g., by gluing in of the insert. In this respect, the necessary amount of desiccant material for the charge can be adjusted at will.

According to claim 13, the flow-through passage opening is formed into the foot part of the cartridge housing, occasionally with simultaneous securing of the filter material disk. Said foot part offers the possibility of positioning the dryer-cartridge in its seat safely and sealed.

According to claim 14, for easy manufacturing, the catching collar is shifted onto the foot part. It can be positioned in an optimal way. The dryer-cartridge acts as a carrier for the catching collar.

According to claim 15, a pressure sensor or switch can be provided at or in the closure insert.

The dimensions according to claim 16 are preferred for an air conditioning system of average capacity. The slim dryer-cartridge requires little space in diameter. The entire surface useful for filtration and flow-through in the openings is large, and significantly larger than the surface occupied by the ribs. The cartridge disk housing is stable and rigid, and can be comfortably inserted deep into the condenser. The filter material used in the openings and/or in the flow-through passage opening is preferably a flexible plastic fabric material. The filter material covering the flow-through passage opening could also be a pad or a multi-layer filter substrate. It is furthermore possible to connect the filter material disk covering the flow-through passage opening with the filter material covering the openings, particularly in the region of the foot part; alternatively, the filter material covering the flow-through passage opening could be a cap put over the lower end of the cartridge housing, depending on the requirements of the respective end user.

Embodiments of the invention, and as shown in the drawings, will be described. The drawings show:
- Fig. 1: a schematical diagram of a vehicle air conditioning system,
- Fig. 2A: a schematical cross section of one embodiment of a block-type, tubular-rib condenser,
- Fig. 2B: a schematical cross section of another embodiment of a condenser,
- Fig. 3: a schematical partial section of a modified embodiment of a condenser,
- Fig. 4: a longitudinal section of a dryer-cartridge,
- Fig. 5: a cross section in section plane V-V of Fig. 4, and
- Fig. 6: a schematical longitudinal section of an alternative embodiment of a dryer-cartridge or a condenser, respectively.

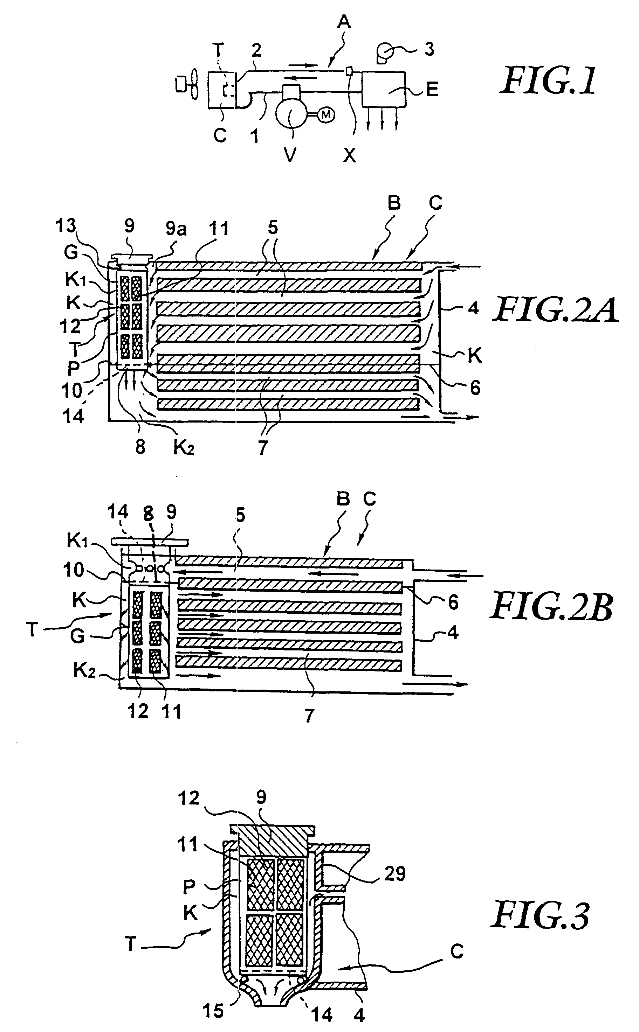

A vehicle air conditioning system A is, in Fig. 1, equipped with a compressor V driven by motor M. The compressor V sucks cooling agent via piping section 1 from an evaporator E and supplies a condenser C. The cooling agent is, e.g. via an expansion valve X, pressed through a piping section 2 into the evaporator E. A fan 3 provided at the location of the evaporator E transmits the cooling efficiency. Within condenser C, a dryer T is provided containing, as usual, a filing of hygroscopical material, e.g., a desiccant filling like a zeolith-granulate. The dryer T is integrated into condenser C to which a further fan or blower can be associated. Alternatively, it is possible to provide a dryer- or accumulator- container (not shown) separate from the condenser and to mount the later-explained dryer-cartridge P in a seat of such container.

In Fig. 2A, the condenser C is designed as a so-called block-type, tubular-rib condenser having an outer shell 4 and a block B. Other condenser types could be used as well. Pipings 5,7 extend between sidewardly-arranged collecting channels K. At least one separation wall 6 is provided. In the collection channel K, at the left side of Fig. 2A, the dryer T is arranged between two channel sections K1 and K2, separated by separation wall 6. Dryer T includes a dryer-cartridge P having a tube-shaped cartridge housing G for the above-mentioned filing of hygroscopical material. A separation wall 6 contains a seat 10, into which the cartridge disk housing G, preferably with the help of a sealing ring, is inserted. In channel section K2, a not shown coolant agent level sensor can be provided. In an access opening 9a, a cover lid 9 is provided, allowing the insertion and removal of said cartridge-housing G, which occasionally can be secured in position by a spring or spacer 13. Cover lid 9 preferably is threaded into the access opening or is removably secured in place, e.g. by means of a C-ring.

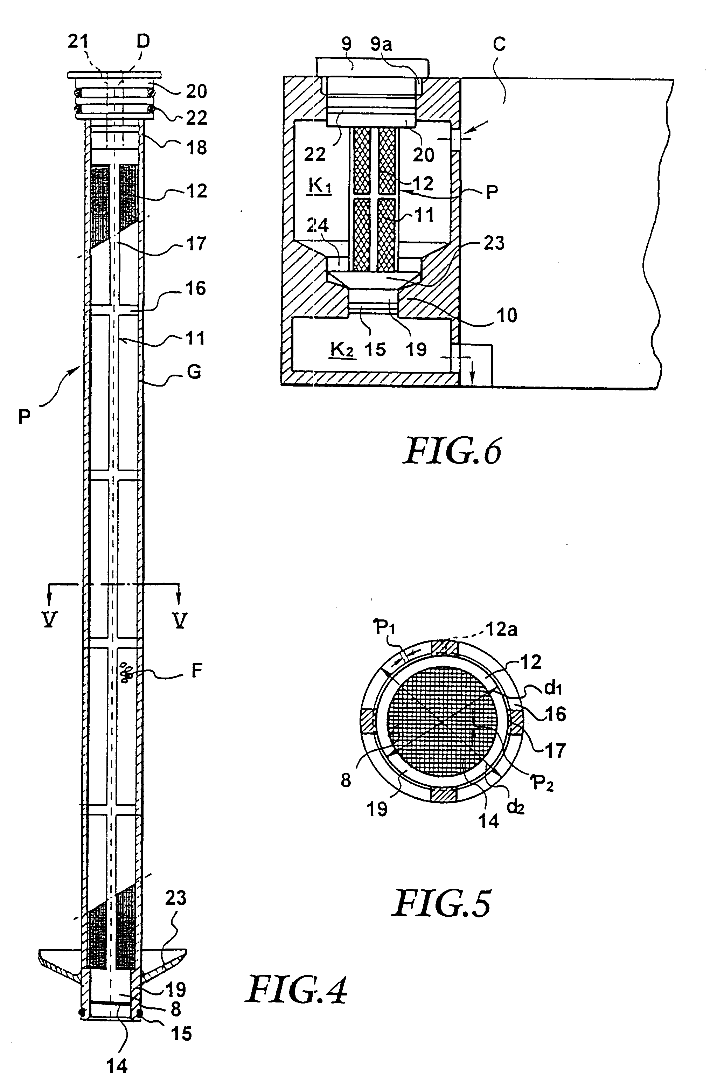

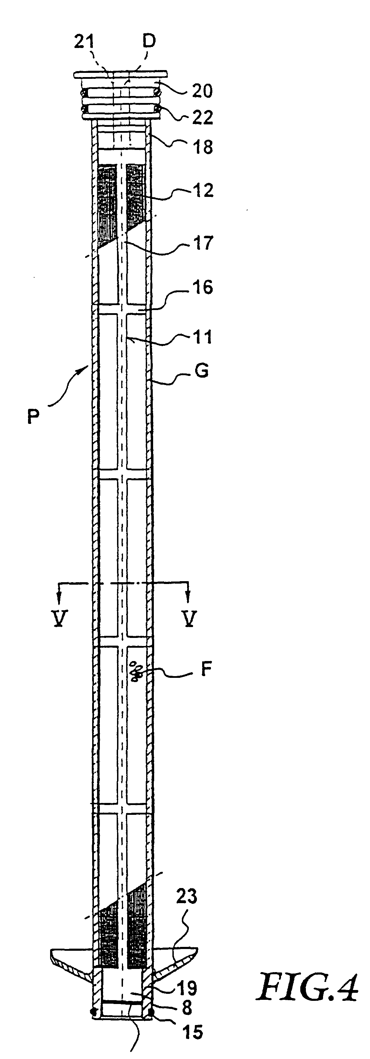

The cartridge housing G includes in its outer wall a plurality of large openings 11 covered by plain filter material 12 being permeable for the cooling agent and having a predetermined, small pore size p1. Furthermore, there is a through-pass opening 8 formed in a foot part of the cartridge housing G, said through-pass opening 8 being covered by filter material 14 (see Figs. 4, 5). All of the cooling agent in the cooling circuit has to pass the cartridge housing G (upright standing arrangement of dryer-cartridge P).

In Fig. 2B, cooling agent coming from piping lines 5 into channel section K1 enters the cartridge housing G via sidewardly-arranged openings and flows through the flow-through passage 8 opening covered by filter material 14 into the filling and further through the large sized openings 11 and the filter material 12 into channel section K2 (downwardly-hanging arrangement of dryer-cartridge P).

In Fig. 3, cartridge housing G is seated with the help of a sealing ring 15 in a shell part 29 of
condenser C (or in a separate dryer- or accumulator- container, not shown). Shell part 29 is connected to piping sections 1,2 and allows access to the dryer-cartridge via cover lid 9.
Due to the sealing effect in seat 15, the entire cooling agent of the cooling circuit has to pass the cartridge housing G.

The dryer-cartridge P in Figs. 4,5 (e.g., for an upright standing arrangement according to Fig. 2A) has the cartridge housing G made as an injection molded-form part (made from metal or plastics) having longitudinal ribs 17 and circumferential ribs 16 and an upper continuous collar 18, and a foot part 19. In the shown embodiment 4, four longitudinal ribs 17 and four circumferential ribs 16 are provided. The plain filter material 12 can be implemented in the form of a tube open at both ends and can be provided inside cartridge housing G so that it is covered from the outside by the injected plastic material and is bonded to ribs 16,17. Alternatively, the plane filter material 12 can be a rolled blank; its longitudinal edges 12a attached to one longitudinal rib 17 (Fig. 5).

The cross sectional area occupied by openings 11 is at least double as large as the cross sectional area occupied by ribs 16,17. The cartridge housing G can be of round cross sectional configuration.

In collar part 18, a cover insert 20 is provided, having a recess 21
(e.g., threaded) for the insertion of a pressure sensor D. At the periphery of collar part 18, at least one sealing ring 22 is provided.

A flow-through passage opening 8 is formed in foot part 19. Filter material 14, which is glued in or secured by injection, is seated in through pass opening 8. Filter material 14 is plain and, e.g., formed as a disk. The filter material 12 covering the openings 11 could be separate plain blanks inserted in-between ribs 16,17, or could be a tube or a rolled blank anchored to ribs 16, 17, respectively.

Filter material 14 is made with a predetermined, uniform pore size p2. Preferably, pore size p2 is significantly larger than pore size p1 (about 350µm or more in relation to around 15 µm to about 150 µm, preferably only 15µm to 60µm, preferably less than 50µm). Foot part 19 is designed with a receiving groove for sealing ring 15. Alternatively, it is possible to insert the disk of the filter material 14 into foot part 19 and to position it by means of a threaded-in insert (not shown); filter material 14 also could be formed as a cap or pad mounted at foot part 19.

In order to equip vehicle air conditioning systems of different capacities with one basic type of a dryer-cartridge P, it is preferable to provide, in larger systems or in a larger condenser, several dryer-cartridges P, one behind another or in parallel, or to fill different volumes into one basic type of dryer-cartridge. Normally, the dryer-cartridge P is to be discarded together with the used or exhausted filling at replacement. However, it is possible to reuse the cartridge housing G again. In the shown embodiment, the dryer-cartridge P is of cylindrical form. The form of the dryer-cartridge P, however, could deviate from the shown configuration and could be adapted to the given mounting space conditions, e.g. rectangular, conical, or bulgy shapes of the dryer-cartridge are possible in order to optimally use the given mounting space.

Fig. 4 indicates that a catching collar 23, made from plastic material or metal and having a funnel shape, is provided on foot part 19. Said catching collar 23 protrudes beyond the outer circumference of foot part 19 and has an outer diameter which depends on the outer diameter of insert 20. E.g., catching collar 23 can have the shape of a funnel or a bowl in order to collect particles separated from the cooling agent by means of filter material 12, which particles, due to gravity and the flow dynamics, are allowed to sink downwardly and to clear the filtering surface. During replacement of the dryer-cartridge P, by pulling it upwardly, said collected particles can be removed as well. Said catching collar 23 can be formed as a unit with foot part 19, or can be slided onto foot part 19, e.g., from its lower end.

In Fig. 6, dryer-cartridge P is positioned between channel sections K1 and K2 of condenser C in seat 10 such that it stands upright and is sealed in seat 10. Catching collar 23 arranged on foot part 19 defines the bottom of a catching chamber 24 provided in channel section K1. Downwardly-inclined chamber walls lead into catching chamber 24 so that particles and other contaminations reaching filter material 12 in openings 11 gradually wander downwardly and are collected in catching collar 23.

Catching collar 23 alternatively could be formed from filter material 12.

The filter material 14 used to cover through-pass opening 8 can be a nylon-monofilament fabric with the pore size p2 of about 350µm, with a yarn diameter of about 230µm, and a relative entire pore area of about 36%. Filter material 12 covering openings 11 can also be a nylon-monofilament fabric material having the significantly smaller pore size p1.

## Claims

1. Vehicle air conditioning system (A) having a condenser (C), particularly a block-type tubing-rib condenser, connected to a compressor (V) within a cooling circuit, said condenser (C) containing in a seat (10) at least one dryer-cartridge (P), said dryer-cartridge (P) containing a hygroscopical filling (F) within a cartridge housing (G) having a casing wall with openings (11) covered by liquid permeable material (12), wherein said cartridge housing (G) is formed with at least one flow-through passage opening (8) structurally separated from said openings (11) and covered by filter material (14) against said filling,
**characterized in that**
said openings (11) and said flow-through passage opening (8) are covered by filter materials (12,14), said filter materials (12,14) having different predetermined pore sizes (p1,p2) such that the pore size (p2) of the filter material (14) covering the flow-through passage opening (8) is larger than the pore size (p1) of the filter material (12) covering the openings (11).

2. Air conditioning system as in claim 1,
**characterized in that**
the pore size (p1) of the filter material (12) covering the openings (11) lies around 15 µm or is up to about 150 µm, optionally below 100 µm, more optionally below 50 µm, and that the pore size (p2) of the filter material (14) covering the passage opening (8) is less than about 500 µm, optionally lies around about 350 µm.

3. Air conditioning system as in claim 1,
**characterized in that**
said cartridge housing (G) is inserted into seat (10) provided between channel sections (K1,K2) of a flow channel (K) of condenser (C), that said flow channel (K) is a collecting channel of the condenser (C) equipped with a tubing-rib-block (B), that the flow-through passage opening (8) is provided in flow-through direction of the cooling agent upstream or downstream of said openings (11), and that the cartridge housing (g) is mounted in approximately upright position with a continuous foot part (19) in seat (10), preferably by means of a sealing (15).

4. Air conditioning system as in at least one of the preceding claims,
**characterized in that**
above said seat (10) a catching chamber (24) is provided which is open in upward direction, and that in said catching chamber (24) a bottom is provided which can be lifted upwardly together with the cartridge housing (G) and has the form of a catching collar (23) arranged at the cartridge housing (G).

5. Dryer-cartridge (P) for a condenser (C) or a dryer container (T) of a vehicle air conditioning system (A), said dryer-cartridge (P) including a cartridge housing (G) having openings (11) and containing a hygroscopical filling (F) in a cover made of filter material (12) covering the openings (11) and being permeable for the cooling agent, wherein said cartridge housing (G) is formed with at least one flow-through passage opening (8) structurally separated from openings (11) and covered by filter material (14) against the filling (F),
**characterized in that**
the filter materials (12,14) have different predetermined pore sizes (p1,p2), and that the pore size (p2) of the filter material (14) covering the flow-through passage opening (8) against the filling (F) is larger than the pore size (p1) of the filter material (12) covering the openings (11).

6. Dryer-cartridge as in claim 5,
**characterized in that**
the pore size (p2) of the filter material covering flow-through passage opening (8) is at least double as large as the pore size (p1) of the filter material covering the openings (11).

7. Dryer-cartridge as in claim 5,
**characterized in that**
the pore size (p1) of the filter material (12) covering the openings (11) lies around 15 µm or is up to about 150 µm, optionally below 100 µm, more optionally below 50 µm, and that the pore size (p2) of the filter material (14) covering the passage opening (8) is less than about 500 µm, optionally lies around about 350 µm.

8. Dryer-cartridge as in at least one of claims 5 to 7,
**characterized by**
a plain filter material (12,14), preferably a nylon-monofilament fabric, said filter material (14) intended for the flow-through passage opening (8) has the shape of a disk, of a plug, of a multi-layer filter substrate, or of a cap.

9. Dryer-cartridge as in claim 5,
**characterized in that**
a catching collar (23) is arranged at the outer side of cartridge housing (G) and protrudes over the circumference of cartridge housing (G), said catching collar (23) being preferably shaped like a funnel or pot.

10. Dryer-cartridge as in at least one of claims 5 to 9,
**characterized in that**
said cartridge housing (G) is formed as a cage-like injection form part made of metal or plastics and has longitudinal and circumferential ribs (16,17) and that the filter material (12) covering said openings (11) is bonded to the ribs (16,17) from the inner side or from the outer side.

11. Dryer-cartridge as in claim 10,
**characterized in that**
the cartridge housing (G) is injection molded *in situ* together with the filter material (12) covering the openings (11), the filter material (12) being inserted in the form of a tube-section or a tube-shaped blank, the free longitudinal edges of said rolled blank being embedded in one of said longitudinal ribs (17) of said cartridge housing (G).

12. Dryer-cartridge as in claim 5,
**characterized in that**
a cover insert (20) is secured in a collar-shaped end part (18) of the cartridge housing (G).

13. Dryer-cartridge as in claim 5,
**characterized in that**
said flow-through passage opening (8) and said filter material (14) are provided in a circumferentially closed foot part (19) of the cartridge housing (G).

14. Dryer-cartridge as in claim 9 and 13,
**characterized in that**
said catching collar (23) is slidably fitted onto foot part (19).

15. Dryer-cartridge as in claim 12,
**characterized in that**
said closing insert (20) is provided with a longitudinal recess (21) for fixing a pressure sensor (D), preferably by means of a threaded connection.

16. Dryer-cartridge as in one of claims 6 to 15,
**characterized in that**
the total area of the openings (11) is significantly larger than the area occupied by said ribs (16,17), preferably at least twice as large, and is larger than the cross sectional area of the said flow-through passage opening (8).

## Patentansprüche

1. Fahrzeug-Klimaanlagensystem (A), mit einem im Kältekreis mit einem Kompressor (V) verbundenen Kondensator (C), insbesondere einem Rippenrohr-Kondensator, der in einem Sitz (10) wenigstens eine Trocknerpatrone (P) enthält, die in einem Patronengehäuse (G) mit durchbrochener Gehäusewand in einer kältemitteldurchlässigen Umhüllung aus die Durchbrüche (11) abdeckendem flüssigkeitsdurchlässigem Material (12) eine wasseranziehende Füllung (F) aufweist, wobei das Patronengehäuse (G) wenigstens eine durch ein Filtermaterial (14) gegenüber der Füllung abgedeckte und von den Durchbrüchen (11) baulich getrennte Durchgangsöffnung (8) aufweist, **dadurch gekennzeichnet,** dass die Durchbrüche (11) und die Durchgangsöffnung (8) mit Filtermaterialien (12, 14) abgedeckt sind, dass die Filtermaterialien (12, 14) unterschiedliche vorbestimmte Porengrößen (p1, p2) aufweisen, und dass die Porengröße (p2) des die Füllung gegenüber der Durchgangsöffnung (8) abdeckenden Filtermaterials (14) größer ist als die Porengröße (p1) des die Durchbrüche (11) abdeckenden Filtermaterials (12).

2. Klimaanlagensystem nach Anspruch 1, **dadurch gekennzeichnet,** dass die Porengröße (p1) des die Durchgangsöffnung (8) abdeckenden Filtermaterials (12) um etwa 15 µm liegt, oder bis zu ca. 150 µm beträgt, vorzugsweise sogar unter 50 µm, und dass die Porengröße (p2) kleiner ist als ca. 500 µm, vorzugsweise bei etwa 350 µm liegt.

3. Klimaanlagensystem nach Anspruch 1, **dadurch gekennzeichnet,** dass das Patronengehäuse (G) in den Sitz (10) zwischen Kanalabschnitten (K1, K2) eines Strömungskanals (K) des Kondensators (C) eingesetzt ist, dass der Strömungskanal (K) ein Sammelkanal des mit einem Rohrrippenblock (B) ausgebildeten Kondensators (C) ist, daß die Durchgangsöffnung (8) in Durchströmrichtung des Kältemittels stromauf oder stromab der Durchbrüche (11) angeordnet ist, und dass das Patronengehäuse (G) in annähernd aufrechtstehender Lage mit einem durchbruchfreien Fußteil (19) in den Sitz eingefügt ist, vorzugsweise unter Zwischenschaltung einer Dichtung (15).

4. Klimaanlagensystem nach wenigstens einem der vorhergehenden Ansprüche, **dadurch gekennzeichnet,** dass oberhalb des Sitzes (10) eine nach oben offene Fangkammer (24) vorgesehen ist, und dass in der Fangkammer (24) ein mit dem Patronengehäuse (G) heraushebbarer Boden in Form eines am Patronengehäuse (G) angeordneten Auffangkragens (23) angeordnet ist.

5. Trocknerpatrone (P) für einen Kondensator (C) oder einen Trocknerbehälter (T) einer Fahrzeug-Klimaanlagensystem (A), mit einem Durchbrüche (11) aufweisenden Patronengehäuse (G), das in einer kältemitteldurchlässigen Umhüllung aus die Durchbrüche (11) abdeckendem Filtermaterial (12) eine wasseranziehende Füllung (F) enthält, wobei das Patronengehäuse (G) wenigstens eine durch Filtermaterial (14) gegenüber der Füllung (F) abgedeckte und baulich von den Durchbrüchen (11) getrennte Durchgangsöffnung (8) aufweist, **dadurch gekennzeichnet,** dass die Filtermaterialien (12, 14) unterschiedliche vorbestimmte Porengrößen (p1, p2) aufweisen, und dass die Porengröße (p2) des die Füllung gegenüber der Durchgangsöffnung (8) abdeckenden Filtermaterials (14) größer ist als die Porengröße (p1) des die Durchbrüche (11) abdeckenden Filtermaterials (12).

6. Trocknerpatrone nach Anspruch 5, **dadurch gekennzeichnet,** dass die Porengröße (p2) des die Durchgangsöffnung (8) abdeckenden Filtermaterials (14) mindestens doppelt so groß ist wie die Porengröße (p1) des die Durchbrüche (11) abdeckenden Filtermaterials.

7. Trocknerpatrone nach Anspruch 5, **dadurch gekennzeichnet,** dass die Porengröße (p1) des die Durchbrüche (11) abdeckenden Filtermaterials (12) um etwa15 µm liegt oder bis 150 µm beträgt, vorzugsweise unter 100 µm, noch vorzugweiser sogar unter 50µm liegt, und dass die Porengröße (p2) des die Durchgangsöffnung (8) abdeckenden Filtermaterials (14) weniger beträgt als etwa 500 µm, vorzugsweise bei etwa 350 µm liegt.

8. Trocknerpatrone nach wenigstens einem der Ansprüche 5 bis 7, **gekennzeichnet durch** ein flächiges Filtermaterial (12, 14), vorzugsweise ein Nylon-Monofilament-Gewebe, wobei das Filtermaterial für die Durchgangsöffnung (8) die Form einer Scheibe, eines Stopfens, eines mehrlagigen Filtersubstrats oder einer Kappe hat.

9. Trocknerpatrone nach Anspruch 5, **dadurch gekennzeichnet,** dass außen am Patronengehäuse (G) wenigstens ein über den Umfang vorspringender Auffangkragen (23) angeordnet ist, vorzugsweise ein trichterförmiger oder topfförmiger Auffangkragen.

10. Trocknerpatrone nach wenigstens einem der Ansprüche 5 bis 9, **dadurch gekennzeichnet,** dass das Patronengehäuse (G) als ein Längs- und Umfangsrippen (16, 17) aufweisendes, käfigartiges Spritzgussteil aus Metall oder Kunststoff geformt ist, und dass das die Durchbrüche (11) abdeckende Filtermaterial (12) innen oder außen an den Rippen (16, 17) angehaftet ist.

11. Trocknerpatrone nach Anspruch 12, **dadurch gekennzeichnet,** dass das Patronengehäuses (G) mit dem die Durchbrüche (11) abdeckenden Filtermaterial (12) in situ spritzgießgeformt ist, wobei das Filtermaterial (12) in Form eines Rohrabschnittes oder eines rohrförmigen Zuschnitts eingesetzt ist, und die freien Längsränder des gerollten Zuschnitts in eine der Längsrippen (17) des Patronengehäuses (G) eingebettet sind.

12. Trocknerpatrone nach Anspruch 5, **dadurch gekennzeichnet,** dass in einem kragenförmigen Ende (18) des Patronengehäuses (G) ein Verschluss-Einsatzteil (20) festgelegt ist.

13. Trocknerpatrone nach Anspruch 5, **dadurch gekennzeichnet,** dass die Durchgangsöffnung (8) und das Filtermaterial (14) in einem durchbruchfreien Fußteil (19) des Patronengehäuses (G) angeordnet sind.

14. Trocknerpatrone nach den Ansprüchen 9 und 13, **dadurch gekennzeichnet,** dass der Auffangkragen (23) verschiebbar auf den Fußteil (19) aufgepasst ist.

15. Trocknerpatrone nach Anspruch 12, **dadurch gekennzeichnet,** dass der Verschluss-Einsatzteil (20) einen Längsdurchgang (21), vorzugsweise mit Gewinde, zum Anbringen eines Drucksensors (D) aufweist.

16. Trocknerpatrone nach wenigstens einem der Ansprüche 5 bis 15, **dadurch gekennzeichnet,** dass die Gesamtfläche der Durchbrüche (11) erheblich größer ist als die von den Rippen (16, 17) beanspruchte Fläche, vorzugsweise mindestens doppelt so groß, und auch größer ist als der Querschnitt der Durchgangsöffnung (8).

## Revendications

1. Système de conditionnement d'air pour véhicule (A) comportant un condenseur (C), en particulier un condenseur de type à bloc tubulaire nervuré, connecté à un compresseur (V) à l'intérieur d'un circuit de refroidissement, ledit condenseur (C) contenant dans un siège (10) au moins une cartouche de séchage (P), ladite cartouche de séchage (P) contenant un remplissage hygroscopique (F) à l'intérieur d'un logement de cartouche (G) comprenant une paroi de carter comportant des ouvertures (11) recouvertes par un matériau perméable aux liquides (12), dans lequel ledit logement de cartouche (G) est formé avec au moins une ouverture de passage d'écoulement (8) séparée de manière structurelle desdites ouvertures (11) et recouverte par un matériau filtrant (14) contre ledit remplissage,
**caractérisé en ce que**,
lesdites ouvertures (11) et ladite ouverture de passage d'écoulement (8) sont recouvertes de matériaux filtrants (12, 14), lesdits matériaux filtrants (12, 14) ayant des dimensions de pore prédéterminées différentes (p1, p2) de sorte que la dimension de pore (p2) du matériau filtrant (14) qui recouvre l'ouverture de passage d'écoulement (8) est supérieure à la dimension de pore (p1) du matériau filtrant (12) qui recouvre les ouvertures (11).

2. Système de conditionnement d'air selon la revendication 1,
**caractérisé en ce que** la dimension de pore (p1) du matériau filtrant (12) recouvrant les ouvertures est d'environ 15 µm ou peut s'élever jusqu'à 150 µm, éventuellement en dessous de 100 µm, et encore plus éventuellement en dessous de 50 µm, et en ce que la dimension de pore (p2) du matériau filtrant (14) recouvrant l'ouverture de passage (8) est inférieure à environ 500 µm, éventuellement environ 350 µm.

3. Système de conditionnement d'air selon la revendication 1,
**caractérisé en ce que** ledit logement de cartouche (G) est introduit à l'intérieur d'un siège (10) disposé entre des sections de canal (K1, K2) d'un canal de débit (K) de condenseur (C), en ce que ledit canal de débit (K) est un canal collecteur du condenseur (C) équipé d'un bloc tubulaire à nervures (B), en ce que ladite ouverture de passage d'écoulement (8) est aménagée dans le sens de l'écoulement d'un agent de refroidissement en amont ou en aval desdites ouvertures (11), et en ce que le logement de cartouche (G) est monté approximativement dans une position verticale avec une partie de support continue (19) dans le siège (10), de préférence au moyen d'un joint d'étanchéité (15).

4. Système de conditionnement d'air selon au moins l'une des revendications précédentes, **caractérisé en ce que** ledit siège (10) mentionné ci-dessus comporte une chambre de captation (24) qui s'ouvre vers le haut, et en ce que dans ladite chambre de captation (24), il est fourni un fond qui peut être levé vers le haut en même temps que le logement de cartouche (G) et qui a la forme d'une bague de verrouillage (23) disposée sur le logement de cartouche (G).

5. Cartouche de séchage (P) destinée à un condenseur (C) ou à un récipient de séchage (T) d'un système de conditionnement d'air pour véhicule (A), ladite cartouche de séchage (P) comprenant un logement de cartouche (G) comportant des ouvertures (11) et contenant un remplissage hygroscopique (F) dans un capot se composant d'un matériau filtrant (12) recouvrant les ouvertures (11) et qui est perméable à l'agent de refroidissement, dans laquelle ledit logement de cartouche (G) est formé avec au moins une ouverture de passage d'écoulement (8) ayant une structure séparée des ouvertures (11) et étant recouvert d'un matériau filtrant (14) contre le remplissage (F),
**caractérisée en ce que**,
les matériaux filtrants (12, 14) ont des dimensions de pore prédéterminées différentes (p1, p2), et en ce que la dimension de pore (p2) du matériau filtrant (14) qui recouvre l'ouverture de passage d'écoulement (8) contre le remplissage (F) est supérieure à la dimension de pore (p1) du matériau filtrant (12) qui recouvre les ouvertures (11).

6. Cartouche de séchage selon la revendication 5, **caractérisée en ce que** la dimension de pore (p2) du matériau filtrant qui recouvre l'ouverture de passage d'écoulement (8) est au moins égale à deux fois la dimension de pore (p1) du matériau filtrant qui recouvre les ouvertures (11).

7. Cartouche de séchage selon la revendication 5, **caractérisée en ce que** la dimension de pore (p1) du matériau filtrant (12) recouvrant les ouvertures est d'environ 15 µm ou peut s'élever jusqu'à 150 µm, éventuellement en dessous de 100 µm, et encore plus éventuellement en dessous de 50 µm, et en ce que la dimension de pore (p2) du matériau filtrant (14) recouvrant l'ouverture de passage (8) est inférieure à environ 500 µm, éventuellement environ 350 µm.

8. Cartouche de séchage selon au moins l'une des revendications 5 à 7, caractérisée par un matériau filtrant lisse, de préférence un tissu en nylon monofilament, ledit matériau filtrant (14) destiné à l'ouverture de passage d'écoulement (8) a la forme d'un disque, d'un tampon, d'un substrat filtrant multi-couches, ou d'un chapeau.

9. Cartouche de séchage selon la revendication 5, **caractérisée en ce qu**'une bague de verrouillage (23) est aménagée sur le côté extérieur du logement de cartouche (G) et est en saillie sur la circonférence du logement de cartouche (G), ladite bague de verrouillage (23) ayant de préférence une forme d'entonnoir ou de pot.

10. Cartouche de séchage selon au moins l'une des revendications 5 à 9, caractérisée en ce ledit logement de cartouche (G) est formée en tant que pièce moulée par injection en forme de cage en métal ou en matière plastique et comporte des nervures longitudinales et sur la circonférence (16, 17) et en ce que le matériau filtrant (12) recouvrant lesdites ouvertures (11) est fixé sur les nervures (16, 17) à partir du côté intérieur ou à partir du côté extérieur.

11. Cartouche de séchage selon la revendication 10, **caractérisée en ce que** le logement de cartouche (G) est moulé par injection *in situ* avec le matériau filtrant (12) recouvrant les ouvertures (11), le matériau filtrant (12) étant introduit sous la forme d'une section tubulaire ou d'une pièce en forme de tube, les bords libres longitudinaux de ladite pièce laminée étant incorporés dans l'une desdites nervures longitudinales (17) dudit logement de cartouche (G).

12. Cartouche de séchage selon la revendication 5, **caractérisée en ce qu**'une pièce rapportée de couvercle (20) est fixée dans une partie d'extrémité en forme de bague (18) du logement de cartouche (G).

13. Cartouche de séchage selon la revendication 5, **caractérisée en ce que** ladite ouverture de passage d'écoulement (8) et ledit matériau filtrant (14) sont fournis dans une partie de support fermée en circonférence (19) du logement de cartouche (G)

14. Cartouche de séchage selon les revendications 9 et 13,
**caractérisée en ce que** ladite bague de verrouillage (23) est ajustée en coulissement sur la partie de support (19).

15. Cartouche de séchage selon la revendication 12, **caractérisée en ce que** ladite pièce rapportée de fermeture (20) comporte un retrait longitudinal (21) destiné à fixer un capteur de pression (D), de préférence à l'aide d'une connexion filetée.

16. Cartouche de séchage selon l'une des revendications 6 à 15,
**caractérisée en ce que** la surface totale des ouvertures (11) est significativement plus grande que la surface occupée par lesdites nervures (16, 17), de préférence au moins deux fois plus grande, et est plus grande que la surface en coupe transversale de ladite ouverture de passage d'écoulement (8).
